# FASCICULE DE BREVET EUROPEEN

(11) **EP 1 544 039 B1**
(45) Date de publication et mention de la délivrance du brevet: **21.06.2006**
(21) Numéro de dépôt: 04300849.9
(22) Date de dépôt: 06.12.2004
(51) Int. Cl.: B60R 7/02

(54) **Dispositif de retenue de charge**
Rückhalteeinrichtung für die Ladung
Cargo restraint device

(30) Priorité: 18.12.2003 FR 0314936
(43) Date de publication de la demande: 22.06.2005
(73) Titulaire: Renault s.a.s., 92100 Boulogne Billancourt (FR)
(72) Inventeur: Hewak, Gregor, F-95490 Vauréal (FR)

(56) Documents cités:
- EP-A- 0 949 119
- DE-A- 10 134 887
- DE-U- 29 500 366
- FR-A- 2 677 592
- US-A- 6 007 283

## Description

La présente invention se rapporte à un dispositif de retenue de charge, adapté à maintenir une charge en appui contre au moins une paroi d'un coffre de véhicule automobile.

Les coffres de véhicule automobile présentent un plancher et sont séparés d'un habitacle, notamment par une banquette arrière. Les charges qui sont déposées sur le plancher du coffre ont tendance à se déplacer lorsque le véhicule est en mouvement si elles ne sont pas maintenues en position fixe au moins selon un plan horizontal.

Afin de pallier cet inconvénient, il a été imaginé de maintenir ces charges au moyen de bandes escamotables et enroulables autour d'un dispositif cylindrique. Ledit dispositif est maintenu verticalement le long d'une paroi dudit coffre et dès que l'on souhaite maintenir une charge en appui contre une paroi sensiblement verticale également, on déroule la bande autour de la charge et on l'étend pour l'accrocher par son extrémité dans une portion de paroi prévue à cet effet.

De la sorte, la bande est en appui sur la charge, qui elle-même est en appui contre la paroi, ce qui permet de la maintenir en position fixe horizontalement sur le plancher malgré les accélérations du véhicule. On pourra se référer au document US 6 007 283 dans lequel est décrit un tel dispositif selon le préamble de la revendication 1.

Bien que ce dispositif soit efficace, il est généralement encombrant et plutôt adaptés aux véhicules utilitaires, pour lesquels d'ailleurs, il a été mis au point. En revanche, pour les véhicules de tourisme qui présentent un coffre dont la taille est déjà relativement restreinte, son installation la réduit plus encore.

Un objet de la présente invention est alors, de fournir un dispositif de retenue de charge qui ne prive pas le coffre d'une partie de ses capacités de rangement.

A cet effet, la présente invention propose un dispositif de retenue de charge adapté à maintenir une charge en appui contre au moins une paroi d'un coffre de véhicule automobile, ledit coffre étant délimité par une banquette arrière, et ledit dispositif comprenant une sangle escamotable dont une première extrémité est reliée à une portion de paroi dudit coffre, tandis qu'une seconde extrémité est adaptée à être accrochée dans une autre portion de paroi dans une position de service pour maintenir ladite sangle contre ladite charge ; ladite première extrémité de ladite sangle présentant une extrémité libre qui est solidaire de ladite banquette arrière.

Ainsi, une caractéristique de l'invention réside dans le rattachement de la première extrémité de la sangle, non pas à un organe supplémentaire, mais directement à la banquette arrière du véhicule qui forme elle-même une paroi du coffre. De la sorte, une partie de coffre, qui était selon l'art antérieur destinée au logement de l'organe supplémentaire constitué d'un dispositif cylindrique est maintenant libérée pour le rangement. Ainsi, ladite extrémité libre de la sangle peut être rattachée par exemple sur l'un ou l'autre des bords latéraux de la banquette arrière dans sa tranche.

Selon un mode de mise en oeuvre de l'invention, ladite banquette arrière présente deux battants définissant deux tranches de banquette et elle comprend un logement entre lesdites tranches, adapté à recevoir ladite sangle dans une position escamotée. De la sorte, non seulement l'espace destiné à recevoir ledit dispositif cylindrique est récupéré, mais en plus la sangle est aisément escamotable entre les deux battants de la banquette.

En outre, selon un mode de réalisation particulier, ladite extrémité libre est adaptée à être reliée à un pivot adapté au pivotement desdits battants. Ainsi, il n'est nul besoin de prévoir un point d'amarrage spécifique pour monter la sangle, mais simplement adapter ladite extrémité libre pour pouvoir la relier au pivot des battants.

Selon un autre mode de réalisation particulier, ladite sangle est élastiquement déformable longitudinalement de telle manière qu'elle puisse être étendue élastiquement pour entourer et s'appliquer à force sur les charges après qu'elle a été accrochée. De cette façon, les charges sont maintenues à force en appui contre la paroi.

Par exemple, ladite sangle est réalisée dans une matière plastique de type élastomère.

Par ailleurs, ladite seconde extrémité présente des premiers moyens d'accrochage adaptés à coopérer avec des seconds moyens d'accrochage solidaires de ladite portion de paroi.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue schématique partielle en coupe verticale montrant une banquette arrière et un coffre de véhicule automobile dans laquelle est installé le dispositif conforme à l'invention dans une première position ;
- la Figure 2 est une vue schématique en coupe partielle montrant le dispositif conforme à l'invention dans une seconde position ;
- la Figure 3 est une vue schématique de dessus montrant la banquette et le coffre illustrés sur la Figure 1, et le dispositif dans ladite seconde position selon un mode particulier de mise en oeuvre ;
- la Figure 4A est une vue schématique de face et arrière d'une banquette arrière selon une autre variante de réalisation ; et,
- la Figure 4B est une vue de profil en coupe selon le plan IVB-IVB illustré sur la Figure 4A.

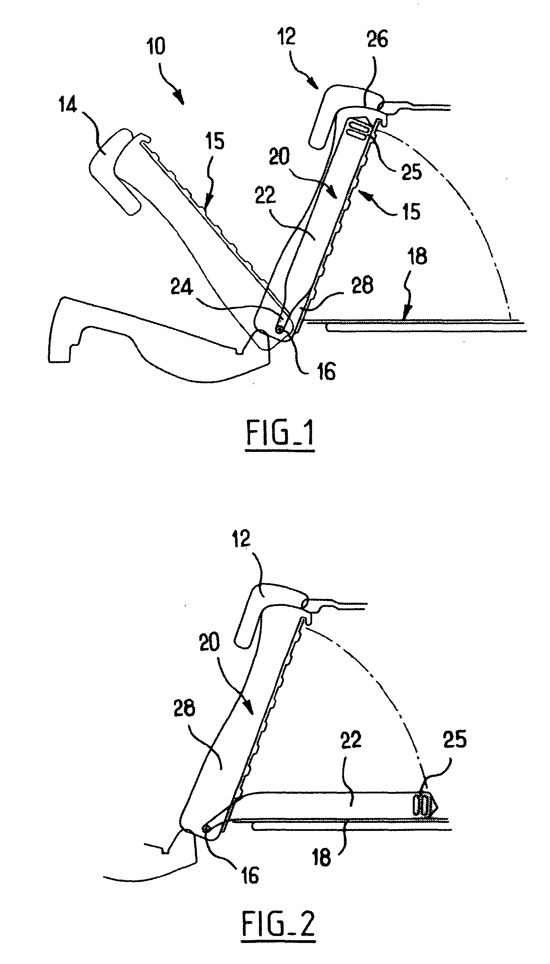

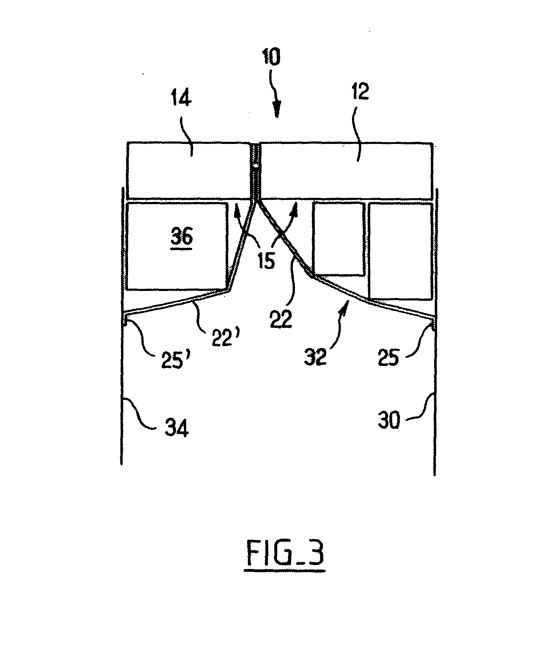

La Figure 1 montre une banquette arrière 10 à deux battants d'un véhicule automobile, un premier battant 12 en position d'assise et un second battant 14 en position rabattue. Les battants 12, 14 présentent chacun une paroi postérieure 15 et ils sont montés à pivotement autour d'un pivot 16, Vers l'arrière du véhicule à partir de la paroi postérieure 15 des battants, s'étend un plancher 18 sensiblement au niveau du pivot 16. Le plancher 18, bordé latéralement par des garnitures de passage de roue qui n'apparaissent sur la Figure 1 et dont on précisera l'emplacement en référence à la Figure 3, forment avec la paroi postérieure 15 des battants 12, 14 dans leur position d'assise, une partie d'un coffre.

Sur cette Figure 1, le battant 12 en position d'assise apparaît sur la tranche 20 dans laquelle est étendue une sangle 22 escamotable dont une extrémité libre 24 est directement montée à pivotement sur le pivot 16 tandis que la seconde extrémité 25 est, elle, accrochée près d'un bord supérieur 26 du battant 12, opposé au pivot 16, au moyen d'un crochet adapté à coopérer avec des moyens formant boude, solidaires du battant 12.

La sangle escamotable 22 est constituée d'une lame en matière plastique, par exemple un élastomère du type polyuréthanne, et elle est logée dans un logement 28 prévu à cet effet et formé d'un renfoncement dans la tranche 20. De la sorte, lorsque le battant 14 en position rabattue sur la Figure 1, est entraîné dans la position d'assise, il effleure la sangle 22 qui est alors entièrement masquée dans la banquette 10.

Par ailleurs, et de la même façon que pour le battant 12 illustré en position d'assise, l'autre battant 14 peut également présenter une sangle escamotable 22. C'est d'ailleurs un mode de mise en oeuvre qui est illustré sur la Figure 3 et que nous décrirons ci-après.

La Figure 2 à laquelle on se référera à présent, illustre partiellement en coupe verticale les éléments illustrés sur la Figure 1, mais on y retrouve le battant 12 en position d'assise et le pivot 16 autour duquel il est adapté à pivoter, ainsi que le plancher 18.

On y retrouve également la sangle escamotable 22, non dans une position escamotée mais dans une position active. Dans cette position, la seconde extrémité 25, après avoir été décrochée et entraînée en pivotement en dehors de son logement 20, a été accrochée dans une portion de paroi latérale, constituée d'une garniture de passage de roue.

On notera que la sangle escamotable 22 est ici au ras du plancher 18, car d'une part son extrémité libre 24 est montée sur le pivot 16 qui est sensiblement sur le même niveau que celui du plancher et ce pour des raisons pratiques et d'autre part, que son autre extrémité 25 est accrochée dans des moyens d'accrochage situés également au ras du plancher 18. Cependant, alors que l'on a profité du pivot 16 pour relier la sangle escamotable 22 au battant 12 et ainsi faire l'économie d'un autre point de liaison, il est néanmoins tout à fait envisageable de réaliser un point de liaison spécifique dans le logement 28 de la tranche 20 et espacé du pivot 16, pour monter la sangle escamotable 22 et pour l'étendre au-dessus et à distance du plancher 18.

On se référera maintenant à la Figure 3 sur laquelle sont illustrés en vue de dessus la banquette arrière 10 et ses battants 12, 14 en position d'assise, tandis que deux sangles escamotables apparaissent étendues dans le coffre en enserrant des charges ; la première sangle 22 que l'on a décrite en référence aux Figures précédentes et une seconde sangle escamotable 22'. La seconde extrémité 25 de la première sangle 22 est accrochée à la paroi 30 qui correspond à la garniture de passage de roue précitée, tandis que la sangle 22 étendue contre des premières charges 32, maintient celles-ci en appui contre la paroi 30 et la paroi postérieure 15.

Symétriquement, la seconde sangle 22' présente une seconde extrémité 25' qui est également accrochée contre une paroi 34 correspondant à la garniture de passage de roue opposée, la seconde sangle 22' étant étendue contre des secondes charges 36 pour les maintenir en appui contre la paroi 34 et la paroi postérieure 15 de l'autre battant 14.

Bien entendu, l'invention n'est pas limitée au mode de mise en oeuvre tel qu'illustré sur la Figure 3 et on prévoit, sans sortir du cadre de l'invention, de relier une sangle escamotable par sa première extrémité directement dans un des bords latéraux de la banquette arrière à proximité de l'une des garnitures de passage de roue de façon à pouvoir l'étendre transversalement dans le coffre et à l'accrocher dans la garniture de passage de roue opposée. On prévoit une pluralité de boucles d'accrochage dans ladite garniture opposée de façon à adapter la position de la sangle escamotable aux dimensions des charges.

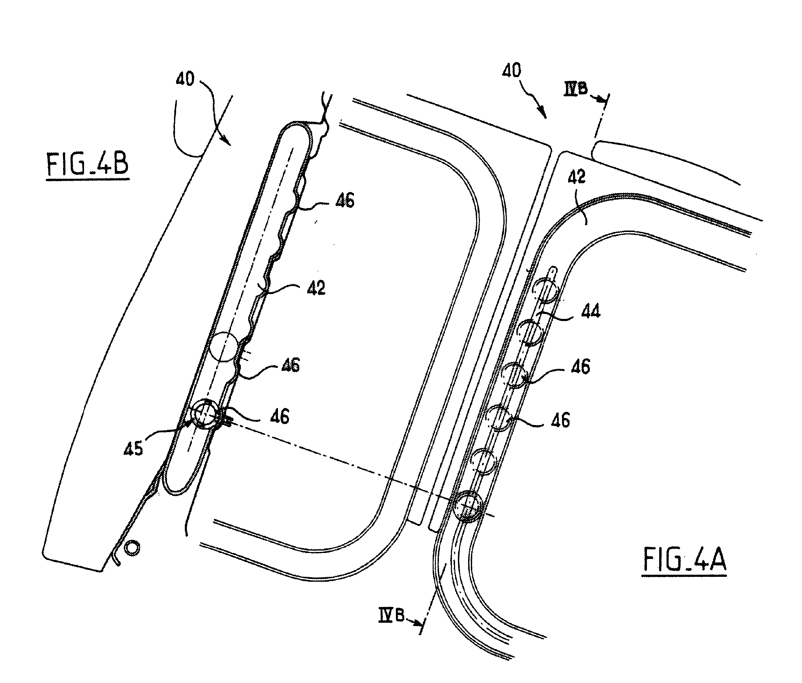

Selon une autre variante de réalisation de l'invention, illustrée sur les Figures 4A et 4B, auxquelles on se référera, la sangle escamotable présente une extrémité libre dont la position du point de fixation est réglable.

La Figure 4A montre une banquette arrière 40 présentant des armatures tubulaires 42 dans lesquelles est ménagée une fente longitudinale 44 orientée vers l'arrière et à travers laquelle l'extrémité libre de ladite sangle est adaptée à s'étendre. Cette extrémité libre est reliée à un système de retenue 45 logé dans les armatures tubulaires 42 et qui est susceptible d'y coulisser sans pouvoir en sortir à travers la fente longitudinale 44. De la sorte, l'extrémité libre est solidaire des armatures tubulaires 42 qui forme alors un rail.

En outre, les armatures tubulaires présentent des points de pré-positionnement 46 formés par des déformations en creux ménagées à l'intérieur des armatures tubulaires 42, destinés à bloquer ladite extrémité libre en translation. Avantageusement, ces déformations sont conformées de façon concave et le système de retenue 45 est de symétrie sphérique pour pouvoir loger partiellement au moins dans ces déformations. Ainsi, lorsque ledit système de retenue 45 est logé dans une déformation 46 et que la sangle est tirée vers l'arrière, sensiblement perpendiculairement aux armatures tubulaires 42, il y est partiellement bloqué en translation.

Lorsque l'on souhaite, déplacer le long des armatures l'extrémité libre de la sangle, pour déplacer le point de fixation, soit la sangle est déformable longitudinalement et un entraînement à force suffit pour faire sortir le système de retenu 45 de sa déformation 46 pour l'adapter dans une autre déformation 46 en le faisant coulisser dans les armatures 42, soit la sangle est rigide et il faut alors désolidariser sa seconde extrémité pour déplacer l'extrémité libre.

## Revendications

1. Dispositif de retenue de charge adapté à maintenir une charge en appui contre au moins une paroi d'un coffre de véhicule automobile, ledit coffre étant délimité par une banquette arrière (10), ledit dispositif comprenant une sangle escamotable (22) dont une première extrémité est reliée à une portion de paroi dudit coffre, tandis qu'une seconde extrémité (25) est adaptée à être accrochée dans une autre portion de paroi dans une position de service pour maintenir ladite sangle escamotable (22) contre ladite charge ;
**caractérisé en ce que** ladite première extrémité de ladite sangle escamotable (22) présente une extrémité libre (24) qui est solidaire de ladite banquette arrière (10).

2. Dispositif de retenue de charge selon la revendication 1, **caractérisé en ce que** ladite banquette arrière comporte un rail de positionnement dans lequel ladite extrémité libre est adaptée à coulisser.

3. Dispositif de retenue de charge selon la revendication 2, **caractérisé en ce que** ledit rail présente des points de pré-positionnement destinés à bloquer ladite extrémité libre en translation.

4. Dispositif de retenue de charge selon la revendication 2 ou 3, **caractérisé en ce que**, ladite banquette arrière présentant une armature tubulaire, ledit rail est formé par ladite armature dans laquelle est ménagée une fente longitudinale.

5. Dispositif de retenue de charge selon la revendication 1, **caractérisé en ce que** ladite banquette arrière (10) présente deux battants (12, 14) définissant deux tranches de banquette et **en ce qu'**elle comprend un logement (28) entre lesdites tranches, adapté à recevoir ladite sangle escamotable (22) dans une position escamotée.

6. Dispositif de retenue de charge selon la revendication 5, **caractérisé en ce que** ladite extrémité libre (24) est adaptée à être reliée à un pivot (16) adapté au pivotement desdits battants (12,14).

7. Dispositif de retenue de charge selon l'une quelconque des revendications 1 à 6, **caractérisé en ce que** ladite sangle escamotable (22) est élastiquement déformable longitudinalement,

8. Dispositif de retenue de charge selon la revendication 7, **caractérisé en ce que** ladite sangle escamotable (22) est réalisée dans une matière plastique de type élastomère.

9. Dispositif de retenue de charge selon l'une quelconque des revendications 1 à 8, **caractérisé en ce que** ladite seconde extrémité (25) présente des premiers moyens d'accrochage adaptés à coopérer avec des seconds moyens d'accrochage solidaires de ladite portion de paroi.

## Claims

1. A load retaining device adapted to keep a load bearing against at least one wall of an automobile vehicle boot, the boot being bounded by a rear seat (10), the device comprising a retractable strap (22), a first end of which is connected to a wall portion of the boot, while a second end (25) is adapted to be hooked to another wall portion in a service position in order maintain the retractable strap (22) against the load, **characterised in that** the first end of this retractable strap (22) comprises a free end (24) which is attached to the rear seat (10).

2. A load retaining device as claimed in claim 1, **characterised in that** the rear seat comprises a positioning rail within which the free end is adapted to slide.

3. A load retaining device as claimed in claim 2, **characterised in that** the rail comprises pre-positioning points adapted to block the free end from sliding.

4. A load retaining device as claimed in claim 2 or 3, **characterised in that** the rear seat comprises a tubular member, and the rail is formed by this member in which a longitudinal slot is provided.

5. A load retaining device as claimed in claim 1, **characterised in that** the rear seat (10) comprises two flaps (12, 14) defining two seat sections and **in that** it comprises a housing (28) between these sections adapted to receive the retractable strap (22) in a retracted position.

6. A load retaining device as claimed in claim 5, **characterised in that** the free end (24) is adapted to be connected to a pivot (16) adapted to enable the pivoting of the flaps (12, 14).

7. A load retaining device as claimed in any one of claims 1 to 6, **characterised in that** the retractable strap (22) is resiliently deformable in a longitudinal direction.

8. A load retaining device as claimed in claim 7, **characterised in that** the retractable strap (22) is made from a plastics material of elastomer type.

9. A load retaining device as claimed in any one of claims 1 to 8, **characterised in that** the second end (25) comprises first hooking means adapted to cooperate with second hooking means rigid with the wall portion.

## Patentansprüche

1. Vorrichtung zum Halten einer Ladung, die dafür ausgelegt ist, eine Ladung mit Druck gegen wenigstens eine Wand eines Kofferraums eines Kraftfahrzeugs zu halten, wobei der Kofferraum durch eine Rückbank (10) begrenzt ist, wobei die Vorrichtung einen versenkbaren Gurt (22) umfasst, bei welchem ein erstes Ende mit einem Wandabschnitt des Kofferraums verbunden ist, wohingegen ein zweites Ende (25) in einen anderen Wandabschnitt in einer Einsatzstellung einhakbar ist, um den versenkbaren Gurt (22) gegen die Ladung zu halten;
**dadurch gekennzeichnet, dass** das erste Ende des versenkbaren Gurtes (22) ein freies Ende (24) aufweist, das mit der Rückbank (10) verbunden ist.

2. Vorrichtung zum Halten einer Ladung nach Anspruch 1, **dadurch gekennzeichnet, dass** die Rückbank eine Positionierungsschiene umfasst, in welcher das freie Ende gleiten kann.

3. Vorrichtung zum Halten einer Ladung nach Anspruch 2, **dadurch gekennzeichnet, dass** die Schiene Vorstellpunkte aufweist, die dazu bestimmt sind, das freie Ende gegen Verstellung zu blockieren.

4. Vorrichtung zum Halten einer Ladung nach Anspruch 2 oder 3, **dadurch gekennzeichnet, dass**, wobei die Rückbank eine rohrförmige Armierung aufweist, die Schiene durch diese Armierung gebildet wird, in welcher ein Längsschlitz ausgebildet ist.

5. Vorrichtung zum Halten einer Ladung nach Anspruch 1, **dadurch gekennzeichnet, dass** die Rückbank (10) zwei Flügel (12, 14) aufweist, die zwei Bankseitenwände definieren, und dadurch, dass sie zwischen den Seitenwänden eine Aufnahme (28) umfasst, die dazu ausgelegt ist, den versenkbaren Gürtel (22) in einer versenkten Stellung aufzunehmen.

6. Vorrichtung zum Halten einer Ladung nach Anspruch 5, **dadurch gekennzeichnet, dass** das freie Ende (24) dazu ausgelegt ist, mit einer Schwenkachse (16) verbunden zu werden, die an das Verschwenken der Flügel (12, 14) angepasst ist.

7. Vorrichtung zum Halten einer Ladung nach einem der Ansprüche 1 bis 6, **dadurch gekennzeichnet, dass** der versenkbare Gurt (22) längsweise elastisch verformbar ist.

8. Vorrichtung zum Halten einer Ladung nach Anspruch 7, **dadurch gekennzeichnet, dass** der versenkbare Gurt (22) aus einem plastischen Material vom Elastomertyp gebildet ist.

9. Vorrichtung zum Halten einer Ladung nach einem der Ansprüche 1 bis 8, **dadurch gekennzeichnet, dass** das zweite Ende (25) erste Einhakmittel aufweist, die dazu ausgelegt sind, mit zweiten Einhakmitteln zusammenzuwirken, die mit dem Wandabschnitt verbunden sind.
